# EUROPEAN PATENT APPLICATION

(11) **EP 4 292 748 A1**
(43) Date of publication of application: **20.12.2023**
(21) Application number: 22752507.8
(22) Date of filing: 12.01.2022
(51) Int. Cl.: B23K 26/00, B23K 26/042, B23K 26/064, B23K 26/082

(54) **LASER PROCESSING APPARATUS**

(30) Priority: 09.02.2021 JP 2021018931
(71) Applicant: Panasonic Intellectual Property Management Co., Ltd., Osaka-shi, Osaka 540-6207 (JP)
(72) Inventor: MATSUMOTO, Akihisa, Kadoma-shi, Osaka 571-8506 (JP); SHIMAZAKI, Daichi, Kadoma-shi, Osaka 571-8506 (JP)
(74) Representative: Murgitroyd & Company
(86) International application number: PCT/JP2022/000715
(87) International publication number: WO 2022/172674

(57) **Abstract**

In the present invention, a head connector (13) comprises: an optical axis adjustment unit (40) that adjusts the optical axis of a laser beam emitted from a tip (12a) of an optical fiber cable (12); and a spread angle adjustment unit (35) that adjusts the spread angle of emitted light (L2). The optical axis adjustment unit (40) comprises: an operation unit (41) configured to be operable from a lateral-surface side of the head connector (13); and a movement unit (42) that moves a fiber holder (31) within a plane orthogonal to the optical axis of the emitted light (L2) in response to an operation of the operation unit (41). The spread angle adjustment unit (35) comprises: an operation unit (36) provided to an insertion unit (33) to be inserted into a laser head (14); and a movement unit (37) that moves a lens (34) in response to the operation of the operation unit (36).

## Description

### TECHNICAL FIELD

The present disclosure relates to a laser processing apparatus.

### BACKGROUND ART

A laser processing apparatus includes a laser emitting unit accommodating a laser oscillator that oscillates laser light, a laser head that irradiates a workpiece with the laser light, and an optical fiber cable that connects the laser emitting unit and the laser head to each other (see, for example, Patent Literature 1). The optical fiber cable supplies the laser light output from the laser emitting unit to the laser head. In the laser processing apparatus configured as described above, the replacement of the laser head or the laser emitting unit is facilitated by removing the optical fiber cable from the laser head.

### CITATION LIST

### Patent Literature

Patent Literature 1: Japanese Laid-Open Patent Publication No. 2013-013905

### SUMMARY OF INVENTION

### Technical Problem

Optical fiber cables have individual differences. Due to individual differences, when the laser head or the laser emitting unit is replaced, it is necessary to adjust the optical axis or the like of the laser light. This complicates replacement work.

### Solution to Problem

In a general aspect, a laser processing apparatus includes a laser emitting unit, a laser head, an optical fiber cable, and a had connector. The laser emitting unit includes a laser oscillating unit, which generates laser light. The laser head includes a galvanometer scanner, which is configured to irradiate a workpiece with the laser light. The optical fiber cable transmits the laser light from the laser emitting unit to the laser head. The head connector is provided at a distal end of the optical fiber cable and is configured to be attachable to and detachable from the laser head. The head connector emits emission light obtained by adjusting the laser light transmitted by the optical fiber cable. The head connector includes an insertion unit inserted into an opening of the laser head, a fiber holder that holds a distal end of the optical fiber cable, an optical axis adjuster that adjusts an optical axis of the laser light emitted from the distal end of the optical fiber cable, and a divergence angle adjuster that adjusts a divergence angle of the emission light. The optical axis adjuster includes a first operation unit configured to be operable from a side surface of the head connector, and a first movement unit that moves the fiber holder in a plane orthogonal to an optical axis of the emission light in response to operation of the first operation unit. The divergence angle adjuster includes at least one lens disposed on the optical axis of the emission light, a second operation unit that is provided in the insertion unit and is rotationally operated, and a second movement unit that moves, in response to operation of the second operation unit, the lens along the optical axis along which the emission light is emitted. Advantageous Effects of Invention

The above-described aspect of the present disclosure provides a laser processing apparatus capable of facilitating replacement work.

### BRIEF DESCRIPTION OF DRAWINGS

Fig. 1 is a block diagram showing a schematic configuration of a laser processing apparatus according to an embodiment.
Fig. 2 is a perspective view showing a laser head and a head connector.
Fig. 3 is a perspective view showing the laser head.
Fig. 4 is a perspective view showing the head connector.
Fig. 5 is a perspective view showing the head connector from which a cover member has been removed.
Fig. 6 is a cross-sectional view taken along line 6-6 of Fig. 5, schematically showing the head connector.
Fig. 7 is a cross-sectional view taken along line 7-7 of Fig. 5, showing a divergence angle adjuster.
Fig. 8 is a cross-sectional view taken along line 8-8 in Fig. 6, showing an optical axis adjuster.
Fig. 9 is a cross-sectional view showing an X-axis adjusting portion of the optical axis adjuster.
Fig. 10 is a cross-sectional view showing a Y-axis adjusting portion of the optical axis adjuster.
Fig. 11 is an enlarged partial cross-sectional view of the head connector, showing a seal portion.
Fig. 12 is a perspective view showing the divergence angle adjuster, the optical axis adjuster, and a fiber holder.
Fig. 13 is a block diagram showing a schematic configuration of a laser processing apparatus according to a modification.

### DESCRIPTION OF EMBODIMENTS

An embodiment will now be described.

The accompanying drawings may show components in an enlarged manner for illustrative purposes. The dimensional ratios of the components may be different from the actual ones or from those in other drawings. In a cross-sectional view, hatching lines of some components may be omitted for illustrative purposes.

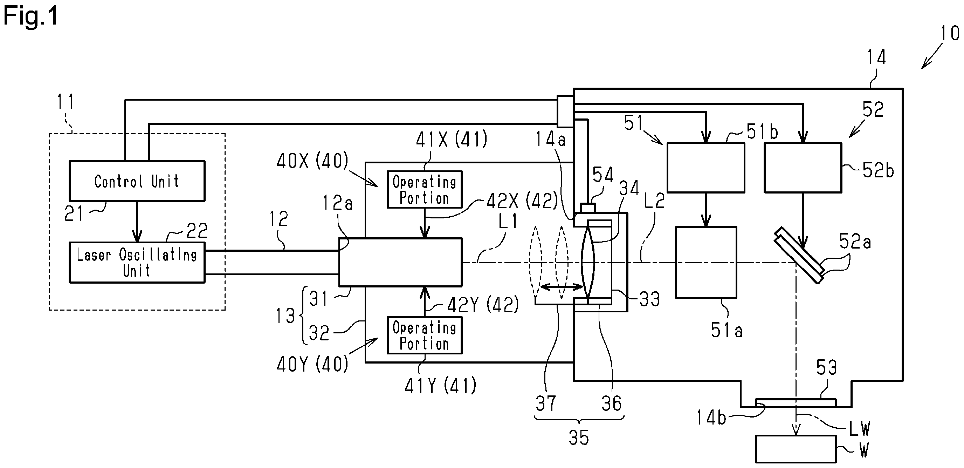

A laser processing apparatus 10 shown in Fig. 1 irradiates a workpiece W with a laser light LW to process the workpiece W. The laser processing apparatus 10 is, for example, a laser marking apparatus for marking the workpiece W.

The laser processing apparatus 10 includes a laser emitting unit 11, an optical fiber cable 12, a head connector 13, and a laser head 14.

The laser emitting unit 11 includes a control unit 21 and a laser oscillating unit 22. The control unit 21 controls operation of the entire laser processing apparatus 10. The control unit 21 is electrically connected to the laser oscillating unit 22 and controls driving of the laser oscillating unit 22. The laser oscillating unit 22 generates a laser light.

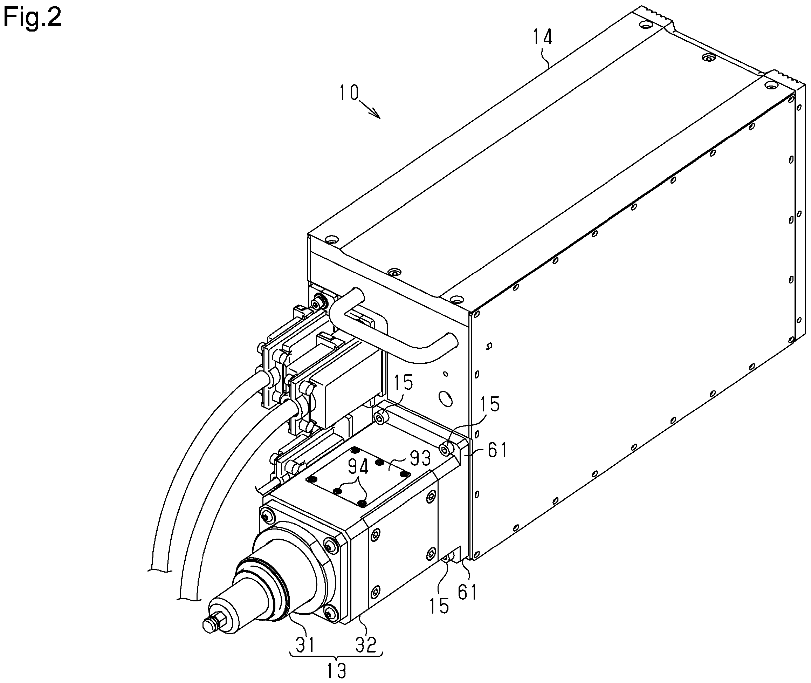

The laser emitting unit 11 is connected to the head connector 13 via the optical fiber cable 12. The head connector 13 is connected to the laser head 14. The head connector 13 is configured to be attachable to and detachable from the laser head 14. As shown in Fig. 2, the head connector 13 is fixed to the laser head 14 by fixing screws 15.

The head connector 13 includes a fiber holder 31 and a support unit 32. The fiber holder 31 holds a tip 12a of the optical fiber cable 12. The support unit 32 is configured to accommodate a portion of the fiber holder 31. The support unit 32 is attached to the laser head 14. The support unit 32 is configured to be attachable to and detachable from the laser head 14.

The support unit 32 includes an insertion unit 33, which is inserted into the laser head 14 from an opening 14a of the laser head 14. The support unit 32 is fixed to the laser head 14 in a state in which the insertion unit 33 is inserted into the laser head 14.

The support unit 32 includes a lens 34 and a divergence angle adjuster 35. A laser light L1 emitted from the tip 12a of the optical fiber cable 12 shown in Fig. 1 is transmitted through the lens 34 and is emitted to the laser head 14 as an emission light L2. The divergence angle adjuster 35 adjusts a divergence angle of the laser light LW (emission light L2) transmitted through the lens 34.

The divergence angle adjuster 35 includes an operation unit 36 and a movement unit 37. The operation unit 36 is provided in the insertion unit 33 of the head connector 13. The operation unit 36 is supported in the insertion unit 33 so as to be rotatable around an optical axis of the laser light LW (emission light L2) emitted from the head connector 13. The movement unit 37 moves the lens 34 along the optical axis in response to operation of the operation unit 36.

The support unit 32 includes an optical axis adjuster 40. The optical axis adjuster 40 adjusts the optical axis of the laser light L1, which is emitted from the tip 12a of the optical fiber cable 12 shown in Fig. 1. The optical axis adjuster 40 includes an operation unit 41 and a movement unit 42. The operation unit 41 is configured to be operable from the lateral outside of the head connector 13. The movement unit 42 moves the fiber holder 31 in response to operation of the operation unit 41.

The optical axis adjuster 40 moves the fiber holder 31 in a plane orthogonal to a reference axis RA of the support unit 32. The reference axis RA of the support unit 32 is set to be orthogonal to a connection surface 61a of a base portion 61 of the support unit 32, which will be discussed below. In the present embodiment, the reference axis RA is parallel to the optical axis of the lens 34 held by the support unit 32, and further substantially agrees with the optical axis of the lens 34. Therefore, the divergence angle adjuster 35 is configured to move the lens 34 along the reference axis RA.

The optical axis adjuster 40 moves the fiber holder 31 along two axes orthogonal to each other. The two axes an X-axis and a Y-axis. The optical axis adjuster 40 includes an X-axis adjusting portion 40X and a Y-axis adjusting portion 40Y. The X-axis adjusting portion 40X includes an operating portion 41X and a moving portion 42X. The Y-axis adjusting portion 40Y includes an operating portion 41Y and a moving portion 42Y.

The laser head 14 includes a focal length adjuster 51 and a galvanometer scanner 52.

The galvanometer scanner 52 includes a galvanometer mirror 52a and a driving unit 52b. The galvanometer mirror 52a reflects the emission light L2 toward the outside of the laser head 14. The driving unit 52b rotates the galvanometer mirror 52a. The driving unit 52b is, for example, a motor and is controlled by the control unit 21. By driving the galvanometer mirror 52a, the workpiece W is scanned in two dimensional direction using the laser light LW. The laser head 14 has an opening 14b through which the emission light L2 passes, and the opening 14b is closed by a protective glass 53.

The focal length adjuster 51 includes a mechanism unit 51a and a driving unit 51b. The mechanism unit 51a includes lenses and a support portion that movably supports the lenses. The driving unit 51b moves the lenses of the mechanism unit 51a. The driving unit 51b is, for example, a motor and is controlled by the control unit 21. The focal length adjuster 51 adjusts the focal length of the laser light LW (emission light L2) emitted toward the workpiece W by the lenses.

The laser head 14 includes a detection unit 54. The detection unit 54 is provided to detect connection of the head connector 13. The detection unit 54 is, for example, a switch operated by the insertion unit 33 of head connector 13, which is inserted into laser head 14. The control unit 21 detects the connection state of the head connector 13 with respect to the laser head 14 using the detection unit 54. When the detection unit 54 detects that the head connector 13 is connected to the laser head 14, the control unit 21 drives the laser oscillating unit 22. When the detection unit 54 detects that the head connector 13 is not connected to the laser head 14, the control unit 21 does not drive the laser oscillating unit 22. This prevents laser light from being emitted from the head connector 13 that is not connected to the laser head 14.

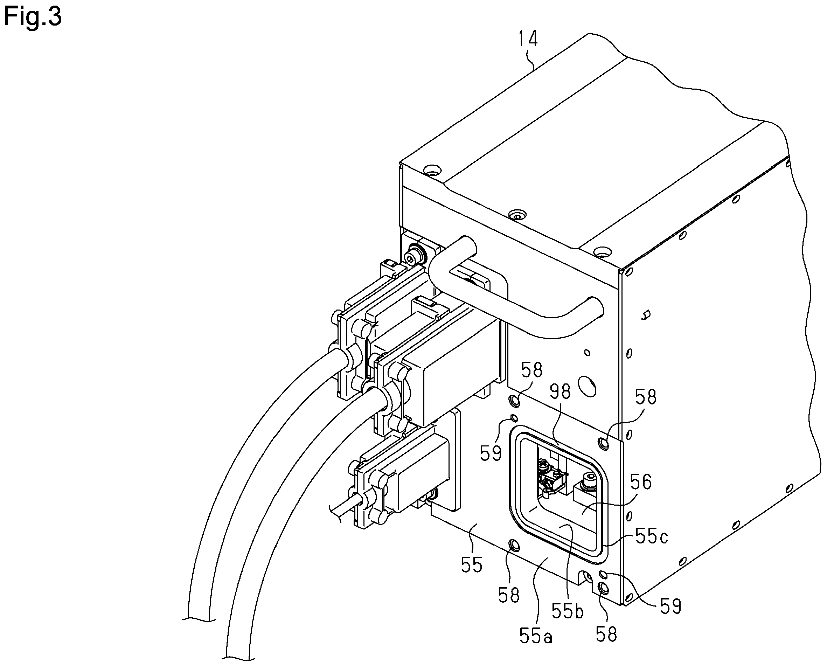

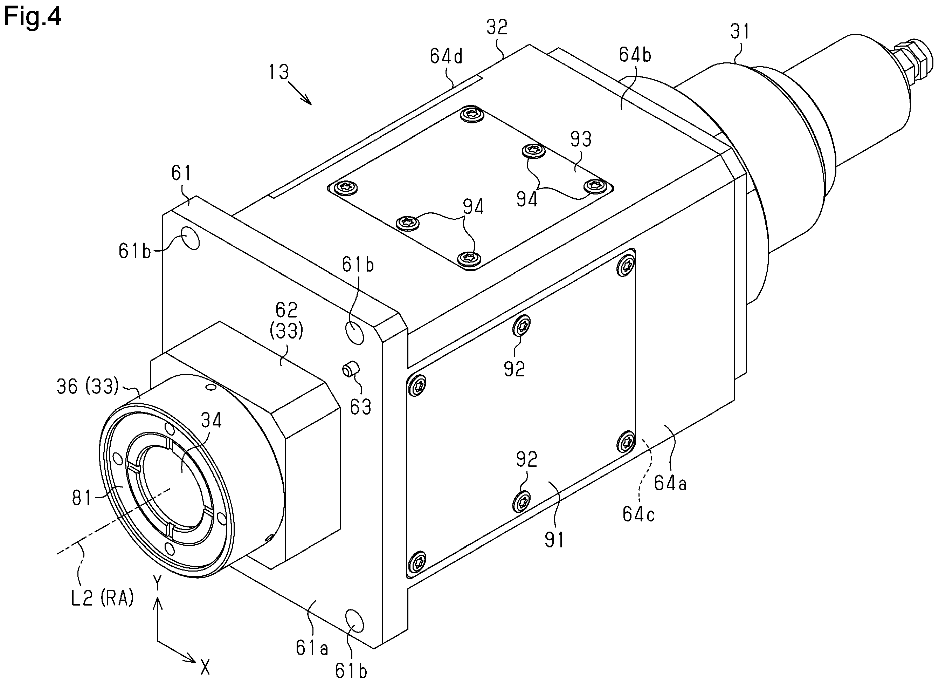

Fig. 2 shows a state in which the head connector 13 is connected to the laser head 14. Fig. 3 shows a state in which the head connector 13 has been removed from the laser head 14. Fig. 4 shows the head connector 13.

As shown in Fig. 4, the support unit 32 of the head connector 13 includes a base portion 61. The base portion 61 is shaped as a rectangular plate. The base portion 61 includes insertion holes 61b formed in the four corners, into which the fixing screws 15 (see Fig. 2) for fixing the head connector 13 to the laser head 14 are inserted.

The head connector 13 includes the insertion unit 33 at the center of the base portion 61. The insertion unit 33 includes a protrusion 62 formed integrally with the base portion 61, and an operation unit 36 at a distal end of the protrusion 62.

The base portion 61 is provided with positioning pins 63. The positioning pins 63 are arranged on opposite sides of the insertion unit 33. That is, the head connector 13 has two positioning pins 63. More specifically, in the present embodiment, the two positioning pins 63 are disposed on a diagonal line passing through the central axis of the lens 34. The two positioning pins 63 are arranged at equal distances from the central axis of the lens 34. That is, the two positioning pins 63 are disposed at positions symmetrical with respect to the central axis of the lens 34.

As shown in Fig. 3, the laser head 14 includes an end plate 55 which is attached to the laser head 14 shown in Figs. 2 and 4. The end plate 55 has an opening 55b. The laser head 14 includes an accommodating portion 56, which can accommodate the insertion unit 33 (see Fig. 4) of the head connector 13 from the opening 55b of the end plates 55 toward the inside of the laser head 14.

The end plate 55 has a connection surface 55a, to which the head connector 13 is connected. An annular groove 55c is formed in the connection surface 55a so as to surround the opening 55b, and an O-ring 98 is received by the groove 55c. The O-ring 98 seals a gap between the end plate 55 and the head connector 13, which is connected to the end plate 55.

As shown in Fig. 3, the end plate 55 has screw holes 58 and positioning holes 59 in the connection surface 55a. The fixing screws 15 for fixing the head connector 13 can be screwed into the screw holes 58, and the positioning pin 63 of the head connector 13 can be fitted into the positioning holes 59. The positioning holes 59 are provided at positions symmetrical with respect to the center of the opening 55b, into which the insertion unit 33 of the head connector 13 is inserted. The positioning pins 63 and the positioning holes 59 form a positioning portion that position the head connector 13 and the laser head 14.

The head connector 13, connected to the laser head 14, has the insertion unit 33 at the center of the base portion 61, and the insertion unit 33 is accommodated in the accommodating portion 56 of the laser head 14. Therefore, the operation unit 36, which is provided in the insertion unit 33, is covered by the laser head 14. The laser head 14 thus functions as a cover member that covers the operation unit 36.

This head connector 13 will now be described.

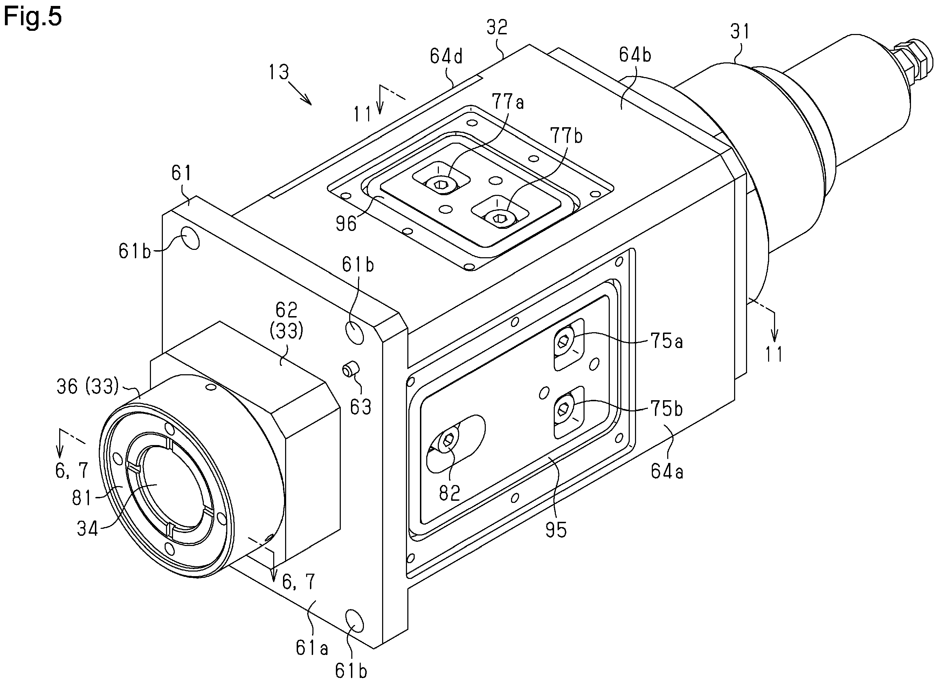

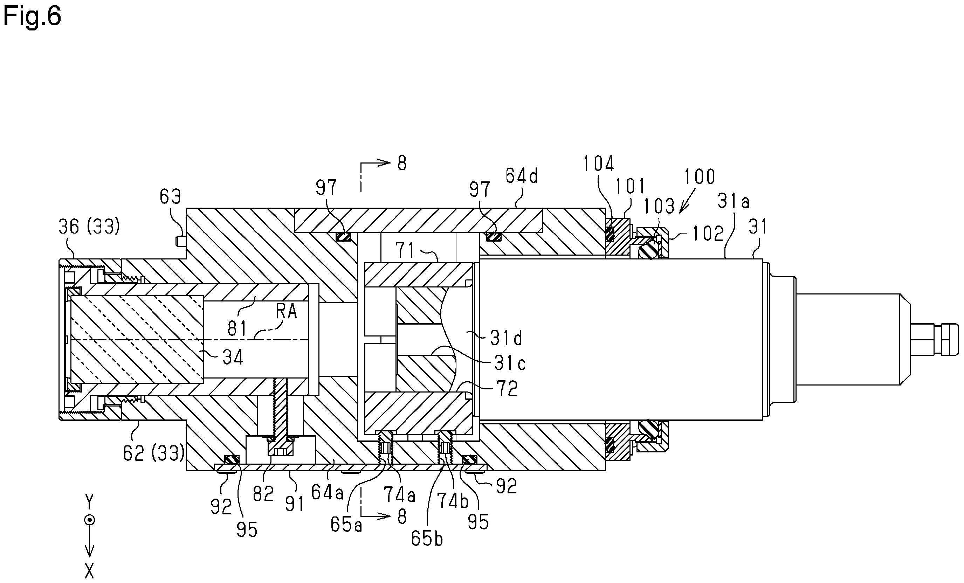

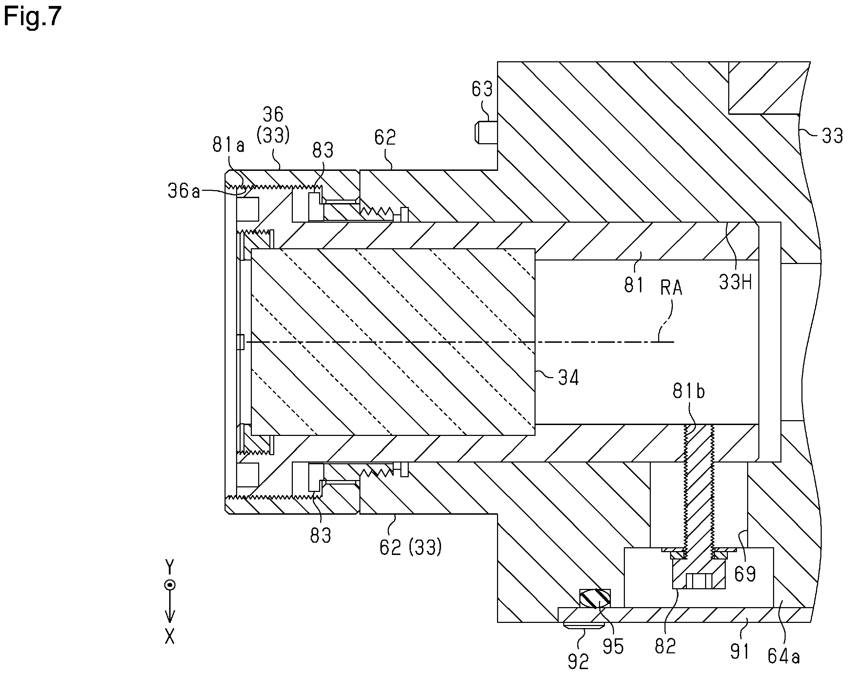

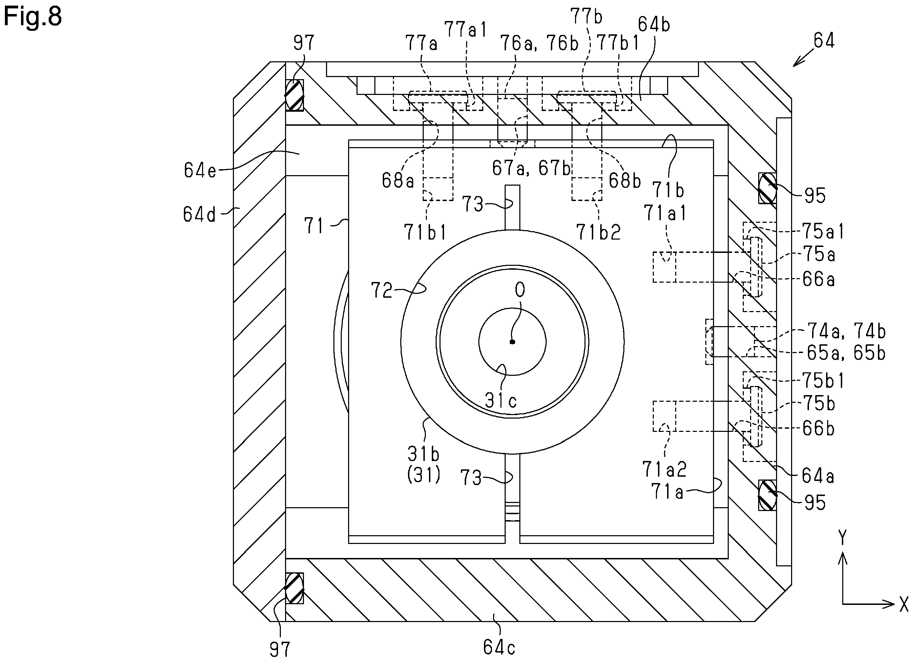

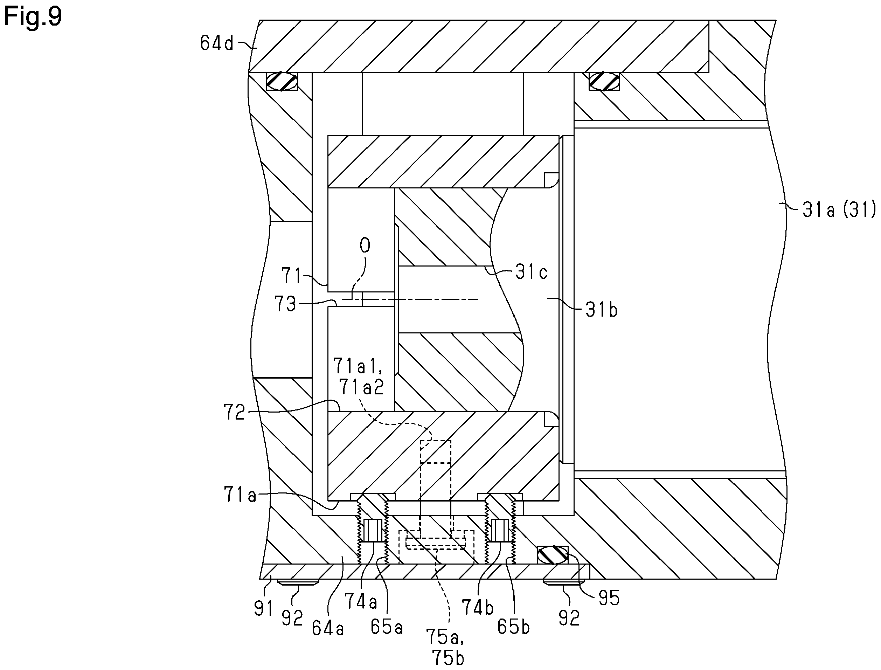

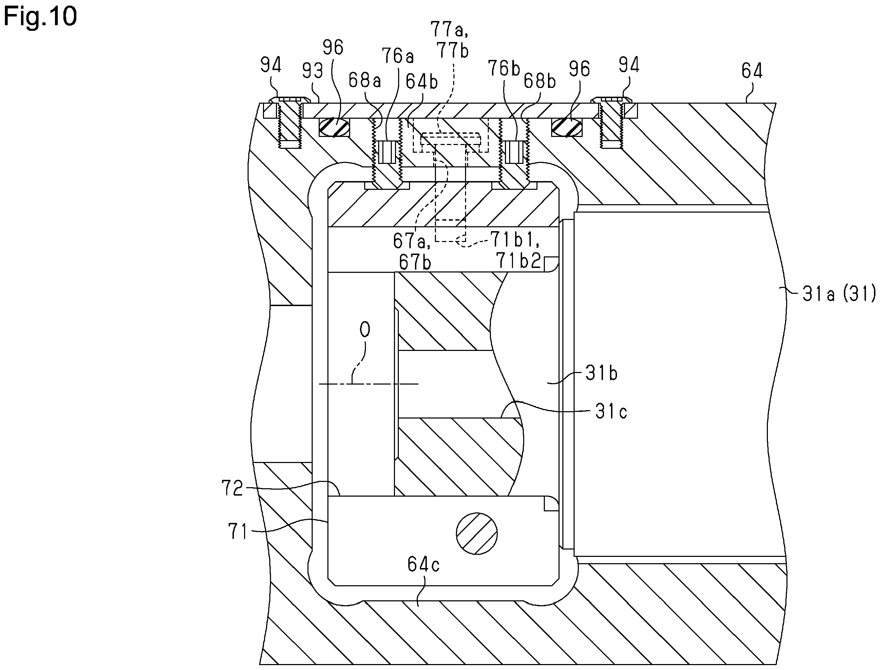

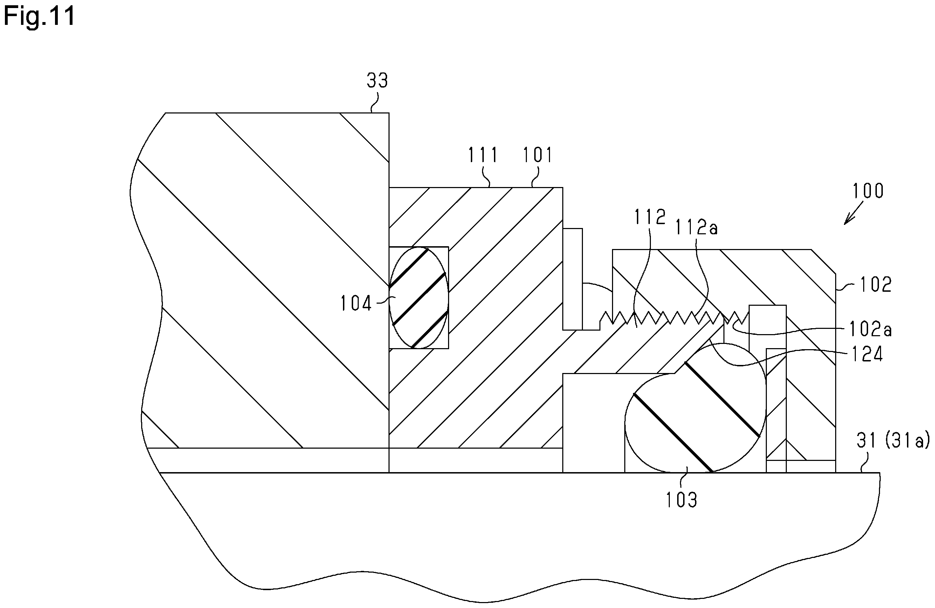

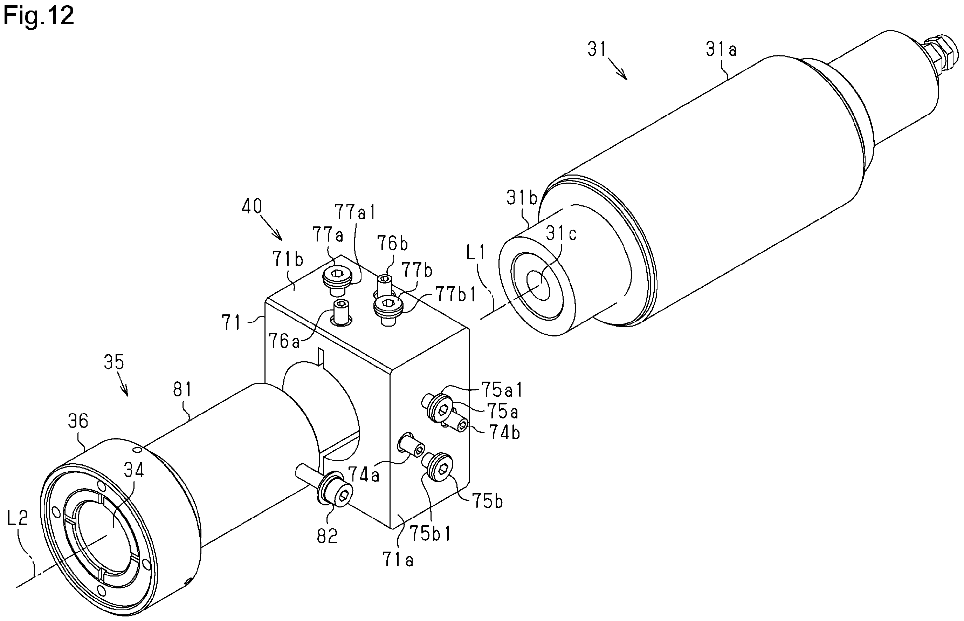

Fig. 4 shows an external appearance of the head connector 13. Fig. 5 shows the head connector 13 in a state in which cover members 91, 93 have been removed. Fig. 6 is a cross-sectional view taken along line 6-6 of Fig. 5, schematically showing the head connector 13. Fig. 7 is a cross-sectional view taken along line 7-7 of Fig. 5, showing the divergence angle adjuster 35. Fig. 8 is a cross-sectional view taken along line 8-8 in Fig. 6, showing the optical axis adjuster 40. Fig. 9 shows the X-axis adjusting portion 40X of the optical axis adjuster 40. Fig. 10 shows the Y-axis adjusting portion 40Y of the optical axis adjuster 40. Fig. 11 is an enlarged partial cross-sectional view of the head connector 13, showing a seal portion. Fig. 12 shows the divergence angle adjuster 35, the optical axis adjuster 40, and the fiber holder 31 of the head connector 13.

As shown in Fig. 4, the head connector 13 includes the support unit 32 and the fiber holder 31.

The support unit 32 includes the base portion 61, the protrusion 62 (insertion unit 33), which protrudes from the base portion 61, and a hold adjuster 64, which is located on the opposite side of the base portion 61 from protrusion 62.

As shown in Fig. 12, the head connector 13 includes the fiber holder 31, the optical axis adjuster 40, and the divergence angle adjuster 35.

The fiber holder 31 includes a first cylindrical portion 31a, which has a cylindrical shape, and a second cylindrical portion 31b, which has a diameter slightly smaller than that of the first cylindrical portion 31a and extends from the first cylindrical portion 31a. The second cylindrical portion 31b has a circular opening 31c at the axial center. The laser light L1 transmitted by the optical fiber cable 12 shown in Fig. 1 is emitted from the opening 31c of the second cylindrical portion 31b.

As shown in Fig. 12, the optical axis adjuster 40 includes a base 71. As shown in Figs. 12 and 8, the base 71 is shaped like a quadrangular prism. The base 71 has a holding hole 72 and a slit 73, which extends from the holding hole 72 toward the outside in the radial direction of the holding hole 72. The holding hole 72 has a circular shape. The diameter of the holding hole 72 is substantially equal to the outer diameter of the second cylindrical portion 31b of the fiber holder 31. The base 71 is formed so as to reduce the diameter of the holding hole 72 by a screw (not shown). The base 71 is fixed to the second cylindrical portion 31b of the fiber holder 31. The optical axis adjuster 40 moves the base 71, thereby moving the fiber holder 31, to which the base 71 is fixed. The base 71 is included in a first movement unit and a second movement unit.

The optical axis adjuster 40 includes operation screws 74a, 74b and fixing screws 75a, 75b, which are part of the X-axis adjusting portion 40X, and operation screws 76a, 76b and fixing screws 77a, 77b, which are part of the Y-axis adjusting portion 40Y. Each screw is screwed into a screw hole of the hold adjuster 64.

As shown in Fig. 8, the hold adjuster 64 includes a first sidewall 64a, a second sidewall 64b, a third sidewall 64c, and a lid member 64d. In the present embodiment, the first sidewall 64a, the second sidewall 64b and the third sidewall 64c are formed integrally. That is, in the illustrated example, a portion of the hold adjuster 64 that includes the first sidewall 64a, the second sidewall 64b, and the third sidewall 64c is a one-piece component. The first sidewall 64a, the second sidewall 64b, and the third sidewall 64c form an accommodating recess 64e, and the base 71 is accommodated in the accommodating recess 64e. The accommodating recess 64e is closed by the lid member 64d. The opening of the accommodating recess 64e closed by the lid member 64d is sealed by an O-ring 97 as a seal member.

As shown in Fig. 4, the cover member 91 is attached to the outer surface of the first sidewall 64a by special screws 92. The cover member 93 is attached to the outer surface of the second sidewall 64b by special screws 94. The special screws 92, 94 can be loosened only by a special tool different from a normal tool. The normal tool refers to a tool that is widely available, for example, a Phillips-head screwdriver or a flat-head screwdriver.

As shown in Figs. 8 and 9, the first sidewall 64a has screw holes 65a, 65b and insertion holes 66a, 66b. The operation screws 74a, 74b, which are part of the X-axis adjusting portion 40X of the optical axis adjuster 40, are threaded into the screw holes 65a, 65b. The fixing screws 75a, 75b are inserted into the insertion holes 66a, 66b. As shown in Fig. 9, the operation screws 74a, 74b and the fixing screws 75a, 75b are concealed by the cover member 91 fixed to the first sidewall 64a.

As shown in Figs. 5, 6, and 8, an O-ring 95 as a seal member is interposed between the cover member 91 and the first sidewall 64a. The O-ring 95 is disposed so as to surround a region surrounded by the special screws 92. The O-ring 95 is disposed so as to surround the operation screws 74a, 74b and the fixing screws 75a, 75b. The O-ring 95 provides a seal between the cover member 91 and the first sidewall 64a, i.e., a seal between the cover member 91 and the hold adjuster 64.

As shown in Figs. 8 and 10, the second sidewall 64b has screw holes 67a, 67b and insertion holes 68a, 68b. The operation screws 76a, 76b, which are part of the Y-axis adjusting portion 40Y of the optical axis adjuster 40, are threaded into the screw holes 67a, 67b. The fixing screws 77a, 77b are inserted into the insertion holes 68a, 68b. As shown in Fig. 10, the operation screws 76a, 76b and the fixing screws 77a, 77b are concealed by the cover member 93 fixed to the second sidewall 64b.

As shown in Figs. 5 and 10, an O-ring 96 as a seal member is interposed between the cover member 93 and the second sidewall 64b. The O-ring 96 is disposed so as to surround a region surrounded by the special screws 94. The O-ring 96 is disposed so as to surround the operation screws 76a, 76b and the fixing screws 77a, 77b. The O-ring 96 provides a seal between the cover member 93 and the second sidewall 64b, i.e., a seal between the cover member 93 and the hold adjuster 64.

As shown in Figs. 6, 8 and 9, the distal ends of the operation screws 74a, 74b screwed into the first sidewall 64a are in contact with a side surface 71a of the base 71. The fixing screws 75a, 75b are screwed into screw holes 71a1, 71a2 formed in the side surface 71a of the base 71. As shown in Fig. 8, the two fixing screws 75a, 75b are disposed on opposite sides of a central axis O of the base 71 in the Y-axis direction. The central axis O is the center of the holding hole 72 formed in the base 71. As shown in Fig. 9, the two operation screws 74a, 74b are disposed on opposite sides of the fixing screws 75a, 75b along the central axis O of the base 71. Spring washers 75a1, 75b1 are interposed between the heads of the fixing screws 75a, 75b and the first sidewall 64a.

As shown in Figs. 6, 8 and 10, the distal ends of the operation screws 76a, 76b screwed into the second sidewall 64b are in contact with a side surface 71b of the base 71. The fixing screws 77a, 77b are screwed into screw holes 71 b1, 71 b2 formed in the side surface 71b of the base 71. As shown in Fig. 8, the two fixing screws 77a, 77b are disposed on opposite sides of the central axis O of the base 71 in the X-axis direction. As shown in Fig. 10, the two operation screws 76a, 76b are disposed on opposite sides of the fixing screws 77a, 77b along the central axis O of the base 71. Spring washers 77a1, 77b1 are interposed between the heads of the fixing screws 77a, 77b and the second sidewall 64b.

Optical axis adjustment by the X-axis adjusting portion 40X will now be described.

In Fig. 8, when the fixing screws 75a, 75b are loosened, the fixing screws 75a, 75b inserted into the insertion holes 66a, 66b urge the base 71 in the X-axis direction shown in Fig. 8 by the elastic force of the spring washers 75a1, 75b1. In this state, when the operation screws 74a, 74b shown in Fig. 8 are rotated to be moved in the reverse X-axis direction (leftward direction in Fig. 8), the base 71 is moved in the reverse X-axis direction by the operation screws 74a, 74b. Conversely, when the operation screws 74a, 74b are rotated to be moved in the X-axis direction (the rightward direction in Fig. 8), the base 71 is moved in the X-axis direction by the spring washers 75a1, 75b1 and the fixing screws 75a, 75b. By rotating the operation screws 74a, 74b in this manner, the distance between the base 71 and the first sidewall 64a is adjusted. By moving the base 71, the optical axis of the laser light L1 emitted from the tip 12a of the optical fiber cable 12 shown in Fig. 1 can be moved in the X-axis direction and the reverse X-axis direction.

As shown in Fig. 9, when one of the operation screws 74a, 74b, for example, the operation screw 74a is rotated to be moved in the reverse X-axis direction (upward in Fig. 9), the emission side of the base 71 is moved in the reverse X-axis direction. When one of the operation screws 74a, 74b is moved in the reverse X-axis direction and the other is moved in the X-axis direction, the base 71 is moved in a similar manner. Conversely, when the operation screw 74a is rotated to be moved in the X-axis direction (downward in Fig. 9), the emission side of the base 71 is moved in the X-axis direction. As described above, by rotating at least one of the operation screws 74a, 74b, it is possible to adjust the angle of the base 71, that is, the angle of the optical axis of the laser light L1 emitted from the tip 12a of the optical fiber cable 12 shown in Fig. 1.

When the fixing screws 75a, 75b are tightened, the movement of the base 71 is restricted by the operation screws 74a, 74b, and the fixing screws 75a, 75b are fixed. Therefore, the base 71 is made immovable by the operation screws 74a, 74b and the fixing screws 75a, 75b. In other words, the base 71 is fixed. The position of the optical axis of the laser light LW in the X-axis direction and the angle in the X-axis direction are fixed.

Optical axis adjustment by the Y-axis adjusting portion 40Y will now be described.

In Fig. 8, when the fixing screws 77a, 77b are loosened, the fixing screws 77a, 77b inserted into the insertion holes 68a, 68b urge the base 71 in the Y-axis direction shown in Fig. 8 by the elastic force of the spring washers 77a1 and 77b1. In this state, when the operation screws 76a, 76b shown in Fig. 8 are rotated to be moved in the reverse Y-axis direction (leftward direction in Fig. 8), the base 71 is moved in the reverse Y-axis direction by the operation screws 76a, 76b. Conversely, when the operation screws 76a, 76b are rotated to be moved in the Y-axis direction (the rightward direction in Fig. 8), the base 71 is moved in the Y-axis direction by the spring washers 77a1, 77b1 and the fixing screws 77a, 77b. By rotating the operation screws 76a, 76b in this manner, the distance between the base 71 and the second sidewall 64b is adjusted. By moving the base 71, the optical axis of the laser light L1 emitted from the tip 12a of the optical fiber cable 12 shown in Fig. 1 can be moved in the Y-axis direction and the reverse Y-axis direction.

As shown in Fig. 10, when one of the operation screws 76a, 76b, for example, the operation screw 76a is rotated to be moved in the reverse Y-axis direction (upward in Fig. 9), the emission side of the base 71 is moved in the reverse Y-axis direction. When one of the operation screws 76a, 76b is moved in the reverse Y-axis direction and the other is moved in the Y-axis direction, the base 71 is moved in a similar manner. Conversely, when the operation screw 76a is rotated to be moved in the Y-axis direction (downward in Fig. 9), the emission side of the base 71 is moved in the Y-axis direction. As described above, by rotating at least one of the operation screws 76a, 76b, it is possible to adjust the angle of the base 71, that is, the angle of the optical axis of the laser light L1 emitted from the tip 12a of the optical fiber cable 12 shown in Fig. 1.

When the fixing screws 77a, 77b are tightened, the movement of the base 71 is restricted by the operation screws 76a, 76b, and the fixing screws 77a and 77b are fixed. Therefore, the base 71 is made immovable by the operation screws 76a, 76b and the fixing screws 77a, 77b. In other words, the base 71 is fixed. The position of the optical axis of the laser light LW in the Y-axis direction and the angle in the Y-axis direction are fixed.

As shown in Fig. 12, the divergence angle adjuster 35 includes the operation unit 36, a lens holder 81, and a fixing screw 82.

As shown in Figs. 7 and 12, the operation unit 36 is formed to have a cylindrical shape. The operation unit 36 includes an internal thread 36a formed in the inner circumferential surface. The operation unit 36 is supported by the protrusion 62 of the support unit 32 and a holding ring 83 fixed to the protrusion 62 so as to be rotatable and immovable in the axial direction.

A lens holder 81, which is part of the second movement unit, is disposed inside the protrusion 62. The lens holder 81 holds the lens 34. The lens holder 81 is formed to have a cylindrical shape, and laser light passes through the inside of the lens holder 81.

The support unit 32 includes a holder insertion hole 33H, into which the lens holder 81 is inserted. The holder insertion hole 33H is formed such that the lens holder 81 is slidable in the axial direction (left-right direction in Fig. 7).

The lens holder 81 includes an external thread 81a formed on the outer circumference of the distal end. The internal thread 36a of the operation unit 36 is screwed onto the external thread 81a. The lens holder 81 has a screw hole 81b a side surface. The fixing screw 82 is screwed into the screw hole 81b.

The fixing screw 82 is inserted into an insertion hole 69 formed in the first sidewall 64a of the support unit 32. The insertion hole 69 is formed such that the fixing screw 82 moves along the reference axis RA, and is formed such that movement of the fixing screw 82 around the reference axis RA is restricted. The fixing screw 82 allows the lens holder 81 to be moved in the optical axis direction and prevents the lens holder 81 from rotating along the inner surface of the holder insertion hole 33H.

When the operation unit 36 is rotated, the lens holder 81, which includes the external thread 81a screwed with the internal thread 36a of the operation unit 36, moves along the reference axis RA. The lens 34 is fixed to the lens holder 81. Thus, rotation of the operation unit 36 moves the lens 34 along the reference axis RA. The lens holder 81, the fixing screw 82, and the holding ring 83 form the movement unit 37, which moves the lens 34 in response to operation of the operation unit 36. Thus, the distance between the lens 34 and the tip 12a of the optical fiber cable 12 shown in Fig. 1 is adjusted. This adjusts the divergence angle of the laser light LW (emission light L2) transmitted through the lens 34.

When the fixing screw 82 is tightened, the lens holder 81 is fixed to the support unit 32. Accordingly, the position of the lens 34, that is, the divergence angle of the laser light LW transmitted through the lens 34 is fixed. As shown in Fig. 6, the fixing screw 82 is concealed by the cover member 91 fixed to the first sidewall 64a. As shown in Figs. 5 and 6, the O-ring 95 of the present embodiment is disposed so as to surround the operation screws 74a, 74b and the fixing screws 75a, 75b, and surround the fixing screw 82.

As shown in Fig. 6, a gap between the support unit 32 and the fiber holder 31 is sealed by a seal portion 100. The seal portion 100 includes a base 101, which is fixed to the support unit 32, a retaining ring 102, which is attached to the base 101, and an O-ring 103, which is disposed between the base 101 and the retaining ring 102. A gap between the base 101 and the support unit 32 is sealed by an O-ring 104.

As shown in Fig. 11, the base 101 includes a fixing portion 111, which is fixed to the support unit 32, and a support ring 112, which protrudes from the fixing portion 111. The support ring 112 is formed to have a cylindrical shape, and has an external thread 112a on the outer circumferential surface. The support ring 112 includes a support surface 124 at the distal end. The support surface 124 is inclined so as to be gradually reduced in diameter toward the fixing portion 111. The retaining ring 102 includes an internal thread 102a on the inner circumferential surface, and the retaining ring 102 is threaded to the support ring 112. When the retaining ring 102 is threaded to the support ring 112, the O-ring 103 is pressed against the outer circumferential surface of the fiber holder 31 by the inclined support surface 124 of the support ring 112. The O-ring 103 provides a seal between the seal portion 100 and the fiber holder 31, that is, a seal between the support unit 32 and the fiber holder 31.

### Operation

The head connector 13, which is attached to the laser head 14, includes the insertion unit 33, which is inserted into the opening 14a of the laser head 14, and the fiber holder 31, which holds the tip 12a of the optical fiber cable 12 for transmitting laser light. The head connector 13 includes the optical axis adjuster 40, which adjusts the optical axis of the laser light L1 emitted from the tip 12a of the optical fiber cable 12, and the divergence angle adjuster 35, which adjusts the divergence angle of the emission light L2.

The optical axis adjuster 40 includes the operation unit 41, which is configured to be operated from the side of the head connector 13, and the movement unit 42, which moves the fiber holder 31 in a plane orthogonal to the optical axis of the emission light L2 in response to operation of the operation unit 41. The divergence angle adjuster 35 includes the operation unit 36, which is provided in the insertion unit 33 inserted into the laser head 14, and the movement unit 37, which moves the lens 34 in response to operation of the operation unit 36. Since the emission light L2 of the head connector 13 is adjusted in the above-described manner, it is not necessary to adjust the optical axis when the head connector 13 is connected to the laser head 14, so that the head connector 13 is easily replaced.

The optical axis of the laser light L1 emitted from the optical fiber cable 12 is adjusted with respect to the reference axis RA set in the support unit 32, that is, the head connector 13. As described above, the reference axis RA is orthogonal to the connection surface 61a, at which the head connector 13 is connected to the laser head 14. The connection surface 61a of the head connector 13 is connected to the connection surface 55a of the laser head 14. Thus, when the head connector 13 is connected to the laser head 14, the laser light LW is orthogonal to the connection surface 55a when entering the laser head 14. When the laser head 14 is replaced, the laser light LW is orthogonal to the connection surface 55a of the replaced laser head 14. Accordingly, optical axis adjustment is not required when replacing the laser head 14, facilitating replacement of the laser head 14. The same applies to a case in which the head connector 13 is replaced, facilitating replacement of the head connector 13 and the laser emitting unit 11.

The cover member 91 conceals the operation screws 74a, 74b and the fixing screws 75a, 75b, which are part of the X-axis adjusting portion 40X of the optical axis adjuster 40. The cover member 93 conceals the operation screws 76a, 76b and the fixing screws 77a, 77b, which are part of the Y-axis adjusting portion 40Y of the optical axis adjuster 40. This prevents the user from carelessly touching screws so as to prevent the optical axis of the laser light from being changed.

The operation screws 74a, 74b and the fixing screws 75a, 75b are arranged in the first sidewall 64a. This allows operation for the X-axis adjustment and fixing to be performed from one side of the head connector 13, facilitating the adjustment.

The operation screws 76a, 76b and the fixing screws 77a, 77b are arranged in the second sidewall 64b. This allows operation for the Y-axis adjustment and fixing to be performed from one side of the head connector 13, facilitating the adjustment.

The cover member 91 conceals the fixing screw 82 of the divergence angle adjuster 35. This prevents the user from carelessly touching the fixing screw 82 so as to prevent the divergence angle of the emission light L2 from being changed.

The cover member 91 is fixed to the head connector 13 (hold adjuster 64) by the special screws 92. The cover member 93 is fixed to the head connector 13 (hold adjuster 64) by the special screws 94. This prevents the cover members 91, 93 from being carelessly removed, so as to prevent the screws from being touched from the outside.

The operation unit 36 of the divergence angle adjuster 35 is provided in the insertion unit 33 inserted into the laser head 14. Therefore, after the head connector 13 is connected to the laser head 14, the operation unit 36 cannot be operated from the outside. This prevents the divergence angle of the emission light L2 from being changed.

As described above, the present embodiment has the following advantages.
(1) The head connector 13, which is attached to the laser head 14, includes the insertion unit 33, which is inserted into the opening 14a of the laser head 14, and the fiber holder 31, which holds the tip 12a of the optical fiber cable 12 for transmitting laser light. The head connector 13 includes the optical axis adjuster 40, which adjusts the optical axis of the laser light L1 emitted from the tip 12a of the optical fiber cable 12, and the divergence angle adjuster 35, which adjusts the divergence angle of the emission light L2.
   The optical axis adjuster 40 includes the operation unit 41, which is configured to be operated from the side of the head connector 13, and the movement unit 42, which moves the fiber holder 31 in a plane orthogonal to the optical axis of the emission light L2 in response to operation of the operation unit 41. The divergence angle adjuster 35 includes the operation unit 36, which is provided in the insertion unit 33 inserted into the laser head 14, and the movement unit 37, which moves the lens 34 in response to operation of the operation unit 36. Since the emission light L2 of the head connector 13 is adjusted in the above-described manner, it is not necessary to adjust the optical axis when the head connector 13 is connected to the laser head 14, so that the head connector 13 is easily replaced.
(2) The optical axis of the laser light L1 emitted from the optical fiber cable 12 is adjusted with respect to the reference axis RA set in the support unit 32, that is, the head connector 13. As described above, the reference axis RA is orthogonal to the connection surface 61a, at which the head connector 13 is connected to the laser head 14. The connection surface 61a of the head connector 13 is connected to the connection surface 55a of the laser head 14. Thus, when the head connector 13 is connected to the laser head 14, the laser light LW is orthogonal to the connection surface 55a when entering the laser head 14. When the laser head 14 is replaced, the laser light LW is orthogonal to the connection surface 55a of the replaced laser head 14. Accordingly, optical axis adjustment is not required when replacing the laser head 14, facilitating replacement of the laser head 14. The same applies to a case in which the head connector 13 is replaced, facilitating replacement of the head connector 13 and the laser emitting unit 11.
(3) The cover member 91 conceals the operation screws 74a, 74b and the fixing screws 75a, 75b, which are part of the X-axis adjusting portion 40X of the optical axis adjuster 40. The cover member 93 conceals the operation screws 76a, 76b and the fixing screws 77a, 77b, which are part of the Y-axis adjusting portion 40Y of the optical axis adjuster 40. This prevents the user from carelessly touching screws so as to prevent the optical axis of the laser light from being changed.
(4) The operation screws 74a, 74b and the fixing screws 75a, 75b are arranged in the first sidewall 64a. This allows operation for the X-axis adjustment and fixing to be performed from one side of the head connector 13, facilitating the adjustment.
(5) The operation screws 76a, 76b and the fixing screws 77a, 77b are arranged in the second sidewall 64b. This allows operation for the Y-axis adjustment and fixing to be performed from one side of the head connector 13, facilitating the adjustment.
(6) The cover member 91 conceals the fixing screw 82 of the divergence angle adjuster 35. This prevents the user from carelessly touching the fixing screw 82 so as to prevent the divergence angle of the emission light L2 from being changed.
(7) The cover member 91 is fixed to the head connector 13 (hold adjuster 64) by the special screws 92. The cover member 93 is fixed to the head connector 13 (hold adjuster 64) by the special screws 94. This prevents the cover members 91, 93 from being carelessly removed, so as to prevent the screws from being touched from the outside.
(8) The operation unit 36 of the divergence angle adjuster 35 is provided in the insertion unit 33 inserted into the laser head 14. Therefore, after the head connector 13 is connected to the laser head 14, the operation unit 36 cannot be operated from the outside. This prevents the divergence angle of the emission light L2 from being changed.

### [Modifications]

The description related with the above embodiment exemplifies, without any intention to limit, applicable forms of a laser processing apparatus according to the present disclosure. In addition to the embodiment described above, the laser processing apparatus according to the present disclosure is applicable to, for example, modifications of the above embodiment that are described below and combinations of at least two of the modifications that do not contradict each other.

A cover member that covers the fixing screw 82, which is part of the divergence angle adjuster 35, and a cover member that covers the operation screws 74a, 74b and the fixing screws 75a, 75b, which form part of the X-axis adjusting portion 40X of the optical axis adjuster 40, may be provided separately.

In the above-described embodiment, the operation screws 74a, 74b and the fixing screws 75a, 75b are arranged in the first sidewall 64a to perform X-axis adjustment and fixing from one side of the head connector 13. However, the operation and the fixing may be performed on different sides.

In the above-described embodiment, the operation screws 76a, 76b and the fixing screws 77a, 77b are arranged in the second sidewall 64b to perform Y-axis adjustment and fixing from one side of the head connector 13. However, the operation and the fixing may be performed on different sides.

In the above-described embodiment, the fixing screw 82, which is part of the divergence angle adjuster 35, is disposed in the first sidewall 64a. However, the fixing screw 82 may be disposed in another sidewall.

Instead of the O-ring 95 shown in Figs. 5 and 6, an O-ring disposed so as to surround the operation screws 74a, 74b and the fixing screws 75a, 75b and an O-ring disposed so as to surround the fixing screw 82 may be provided.

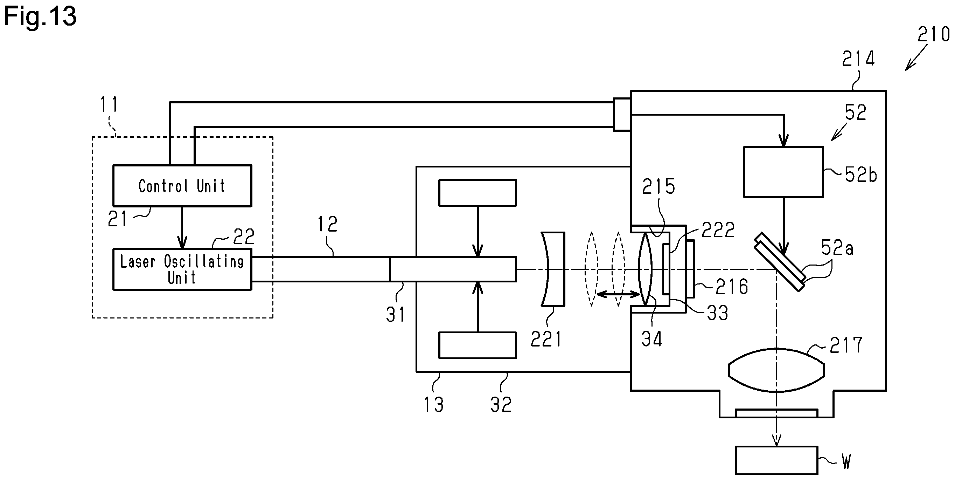

Fig. 13 shows a configuration of a laser processing apparatus 210 according to a modification. The laser processing apparatus 210 includes an accommodating recess 64e in a laser head 214. A disc-shaped protective glass 216 separates the interior of the laser head 14 from the interior of the accommodating recess 64e. As shown in Fig. 13, the focal length adjuster 51 (see Fig. 1) may be omitted.

As shown in Fig. 13, the laser head 214 may include a lens 217 such as an fθ lens.

As shown in Fig. 13, the head connector 13 may include a lens 221. The lens 221 is, for example, a concave lens. The lens 221 is used with the lens 34 to adjust a divergence angle, a beam diameter, and the like of the laser light LW emitted from the head connector 13.

As shown in Fig. 13, the insertion unit 33 may include a protective glass 222.

The present disclosure may be employed in a laser processing apparatus other than the laser marking apparatus. For example, the present disclosure may be employed in a laser processing apparatus that performs processing (for example, cutting) by irradiating a workpiece with laser light.

All features disclosed in the specification and/or claims are intended to be disclosed separately and independently for the purpose of the initial disclosure and to define the invention in the claims independently of the combinations of features in the embodiments and/or claims. All descriptions representing numerical ranges or sets of constituents are intended to disclose all possible intermediate values or intermediate constituents, specifically as limitations of the numerical range, for the purpose of the initial disclosure and for defining the invention in the claims.

### REFERENCE SIGNS LIST

10: Laser Processing Apparatus
11: Laser Emitting Unit
12: Optical Fiber Cable
13: Head Connector
14: Laser Head
14a, 14b: Openings
21: Control Unit
22: Laser Oscillating Unit
31: Fiber Holder
31a: First Cylindrical Portion
31b: Second Cylindrical Portion
31c: Opening
32: Support Unit
33: Insertion Unit
33H: Holder Insertion Hole
34: Lens
35: Divergence Angle Adjuster
36: Operation Unit (Second Operation Unit)
37: Movement Unit (Second Movement Unit)
40: Optical Axis Adjuster
40X: X-axis Adjusting Portion
40Y: Y-axis Adjusting Portion
41: First Operation Unit
41X: X-axis Operating Portion
41Y: Y-axis Operating Portion
42: First Movement Unit
42X: X-axis Moving Portion
42Y: Y-axis Moving Portion
51: Focal Length Adjuster
51a: Mechanism Unit
51b: Driving Unit
52: Galvanometer Scanner
55b: Opening
52a: Galvanometer Mirror
52b: Driving Unit
53: Protective Glass
54: Detection Unit
55: End Plate
55a: Connection Surface
55b: Opening
55c: Groove
56: Accommodating Portion
58: Screw Hole
59: Positioning Hole
61: Base Portion
61a: Connection Surface
61b: Insertion Hole
62: Protrusion
63: Positioning Pin
64: Hold Adjuster
64a: First Sidewall
64b: Second Sidewall
64c: Third Sidewall
64d: Lid Member
64e: Accommodating Recess
65a, 65b: Screw Holes
66a, 66b: Insertion Holes
67a, 67b: Screw Holes
68a, 68b: Insertion Holes
69: Insertion Hole
71: Base
71a, 71b: Side Surfaces
71a1, 71a2: Screw Holes
71b1, 71b2: Screw Holes
72: Holding Hole
73: Slit
74a, 74b: Operation Screws (First Operation Unit, X-axis Operating Portion)
75a, 75b: Fixing Screws (First Operation Unit, First Position-Fixing Portion, X-axis Operating
Portion, X-axis Fixing Portion)
75a1, 75b1: Spring Washers
76a, 76b: Operation Screws (First Operation Unit, Y-axis Operating Portion)
77a, 77b: Fixing Screws (First Operation Unit, First Position-Fixing Portion, Y-axis Operating
Portion, Y-axis Fixing Portion)
77a1, 77b1: Spring Washers
81: Lens Holder
81a: External Thread
81b: Screw Hole
82: Fixing Screw (Second Position-Fixing Portion)
83: Holding Ring
91, 93: Cover Members
92, 94: Special Screws
95-98: O-rings
100: Seal Portion
101: Base
102: Retaining Ring
102a: Internal Thread
103: O-ring
104: O-ring
111: Fixing Portion
112: Support Ring
112a: External Thread
124: Support Surface
L1: Laser Light
L2: Emission Light
LW: Laser Light
W: Workpiece

## Claims

1. A laser processing apparatus, comprising:
a laser emitting unit that includes a laser oscillating unit, the laser oscillating unit generating laser light;
a laser head that includes a galvanometer scanner, the galvanometer scanner configured to irradiate a workpiece with the laser light;
an optical fiber cable that transmits the laser light from the laser emitting unit to the laser head;and
a head connector that is provided at a distal end of the optical fiber cable and is configured to be attachable to and detachable from the laser head, the head connector emitting emission light obtained by adjusting the laser light transmitted by the optical fiber cable, wherein
the head connector includes:
an insertion unit inserted into an opening of the laser head;
a fiber holder that holds a distal end of the optical fiber cable;
an optical axis adjuster that adjusts an optical axis of the laser light emitted from the distal end of the optical fiber cable; and
a divergence angle adjuster that adjusts a divergence angle of the emission light,
the optical axis adjuster includes:
a first operation unit configured to be operable from a side surface of the head connector; and
a first movement unit that moves the fiber holder in a plane orthogonal to an optical axis of the emission light in response to operation of the first operation unit, and the divergence angle adjuster includes:
at least one lens disposed on the optical axis of the emission light;
a second operation unit that is provided in the insertion unit and is rotationally operated; and
a second movement unit that moves, in response to operation of the second operation unit, the lens along the optical axis along which the emission light is emitted.

2. The laser processing apparatus according to claim 1, wherein the head connector includes:
a cover member that covers the first operation unit; and
special screws that fix the cover member.

3. The laser processing apparatus according to claim 2, wherein the optical axis adjuster includes a first position-fixing portion that fixes a position of the fiber holder.

4. The laser processing apparatus according to claim 3, wherein the cover member covers the first position-fixing portion.

5. The laser processing apparatus according to any one of claims 2 to 4, wherein the divergence angle adjuster includes a second position-fixing portion that fixes a position of the lens.

6. The laser processing apparatus according to claim 5, wherein the cover member covers the second position-fixing portion.

7. The laser processing apparatus according to claim 6, further comprising a seal member that is disposed in a region surrounded by the special screws so as to surround the first operation unit.

8. The laser processing apparatus according to claim 7, wherein the seal member is further disposed so as to surround the second position-fixing portion.

9. The laser processing apparatus according to any one of claims 1 to 8, wherein
the optical axis adjuster is configured to move the fiber holder along an X-axis and a Y-axis that are orthogonal to the optical axis and orthogonal to each other, and
the first operation unit includes:
an X-axis operating portion that is operated to adjust a position in an X-axis direction; and
a Y-axis operating portion that is operated to adjust a position in a Y-axis direction.

10. The laser processing apparatus according to claim 9, wherein the optical axis adjuster includes:
an X-axis fixing portion that fixes the position in the X-axis direction; and
a Y-axis fixing portion that fixes the position in the Y-axis direction.

11. The laser processing apparatus according to any one of claims 1 to 10, further comprising a cover member that covers the second operation unit.

12. The laser processing apparatus according to any one of claims 1 to 11, wherein
the head connector includes two positioning pins disposed on opposite sides of the insertion unit, and
the laser head includes positioning holes into which the two positioning pins can be fitted.

13. The laser processing apparatus according to claim 12, wherein
the two positioning pins are arranged at positions that are symmetrical with respect to a central axis of the lens, and
the positioning holes are provided at positions symmetrical with respect to a center of an opening into which the insertion unit is inserted.
